# EUROPEAN PATENT SPECIFICATION

(11) **EP 2 866 168 B1**
(45) Date of publication and mention of the grant of the patent: **01.02.2017**
(21) Application number: 14002909.1
(22) Date of filing: 21.08.2014
(51) Int. Cl.: G06F 21/55, G06Q 10/06, G06Q 10/10

(54) **Calibration of strategies for fraud detection**
Kalibrierung von Strategien zur Betrugserfassung
Étalonnage de stratégies de détection de fraude

(30) Priority: 17.09.2013 US 201314029526
(43) Date of publication of application: 29.04.2015
(73) Proprietor: SAP SE, 69190 Walldorf (DE)
(72) Inventor: Erdelmeier, Martin, 69190 Walldorf (DE); Gschloessl, Christian, 69190 Walldorf (DE); Preissendoerfer, Manfred, 69190 Walldorf (DE); Hladik, Michael, 69190 Walldorf (DE); Berettoni, Eric, 69190 Walldorf (DE); Hammerl, Kay, 69190 Walldorf (DE); Droll, Sebastian, 69190 Walldorf (DE)
(74) Representative: Müller-Boré & Partner Patentanwälte PartG mbB

(56) References cited:
- WO-A1-01/77959
- US-A1- 2008 140 576
- US-A1- 2011 173 116
- US-A1- 2012 137 367
- US-A1- 2013 085 769

## Description

### BACKGROUND

Detecting fraud continues to be an important function for business, government and other enterprises. As such enterprises rely more and more on transacting business electronically and keeping electronic records, there is an ongoing need to provide better tools adapted to interact with the varied software and data storage systems in use today.

One class of fraud detection relates to real time detection of fraud, such as in connection with the on-line processing of a transaction. Such fraud can take many forms, including fraudulent efforts to use a stolen credit card, to change a delivery address or to return an item, as just some examples.

It is also important to provide for more in-depth investigation of fraudulent activity. In many cases, at least a part of the investigation takes place after the fraud has occurred. An investigator, such as an employee of the enterprise or an outside investigator hired by the enterprise, reviews the enterprise's existing records to determine suspicious data, patterns associated with fraud and/or other indicators of fraudulent activity. If such investigation yields helpful results, such as through a process to confirm suspicious data attributes based on known cases of fraud in the existing records, then the same or similar methodology can be employed to investigate current records of ongoing activity.

US 2013/085769 A1 discloses a method for characterizing healthcare provider, claim, beneficiary and healthcare merchant normal behaviour using non-parametric statistical outlier detection scoring techniques. Merchant models are designed and created using a plurality of external data sources. Historical healthcare claim data is analyzed to create a characterization template or characterization scoring model based on current and historical data. Predictive models are monitored, validated and optimized regularly.

WO 01/77959 A1 discloses a method for determining at a merchant site the likelihood that online transactions are fraudulent. A scoring server using statistical model us multiple profiles, along with weights to indicate the degree to which the profiles identify the purchaser of the transaction. Particularly, a supervised learning model is used, in which the historical data is tagged to identify which transactions subsequently proved to have been legitimate and which subsequently proved to have been fraudulent.

US 2008/140576 A1 discloses a method for evaluating fraud risk in an electronic commerce transaction between consumer and a merchant over a network, wherein the level of risk associated with each order is measured and a risk score is returned to the merchant. The fraud screening and risk scoring system interacts with a transaction history database, wherein transaction records include a field indicating the final outcome of the transaction.

US 2011/173116 A1 discloses a method of detecting and assessing multiple types of risks related to mortgage lending. Particularly, a computerized method that includes a creating a combined risk detection model is disclosed.

US 2012/137367 A1 discloses a continuous anomaly detection method based on multidimensional behaviour modeling and heterogeneous information analysis.

Presently available tools for investigators fall short of providing effective assistance.

### SUMMARY

Described below are approaches to calibrating fraud detection strategies that provide investigators or other users the ability to search vast amount of records, which may be stored or generated by disparate systems, and, based on a review of initial results, to tune or refine their strategies to achieve results of a desired scope or type. Effective strategies can then be applied for searching current records, and in some cases, real-time determination effective to halt a business activity, if appropriate.

According to a method implementation, determining potentially fraudulent records in a database comprises defining a detection strategy, executing the detection strategy, dynamically calibrating the detection strategy as desired and executing the calibrated detection strategy on new records to detect potentially fraudulent activity. The detection strategy is targeted to detect existing records from the database and comprises multiple inputs. The detection strategy is then executed on existing records and results are displayed for review by a user. The detection strategy is dynamically calibrated based on input received from the user, and any modified results are displayed. A calibrated detection strategy is set or designated, and this calibrated detection strategy is then executed on new records.

Defining a detection strategy and/or dynamically calibrating the detection strategy can comprise setting at least one input, including at least one of a threshold, at least one weighting factor and at least one parameter. Such inputs can be individually set for each detection method.

The method implementations can include calculating metrics for proven records and false positive records, wherein the false positive records are a subset of the existing records suspected of being fraudulent based on the results of the detection strategy but determined in fact to be non-fraudulent.

The method implementations can comprise providing a graphical user interface to the user to display the multiple inputs, to receive input from the user and to display results.

Dynamically calibrating the detection strategy as desired can comprise modifying inputs until a desired number of false positive results is determined.

Executing the calibrated detection strategy on new records can comprise synchronously executing the calibrated detection strategy and halting an associated business process if fraudulent activity is determined.

An alert item can be created for each of the new records detected by the calibrated detection strategy. In some implementations, each alert item is be communicated to a case management system.

The method can comprise calculating an efficiency based on the results and displaying the efficiency.

Dynamically calibrating the detection strategy can comprise displaying and receiving input from influence controls that graphically depict how changes to inputs modify results.

In some implementations, existing records from an enterprise resource planning system are duplicated in a fraud management system having in-memory processing capability before calibration takes place.

This Summary is provided to introduce a selection of concepts in a simplified form that further described below in the Detailed Description. The Summary is not intended to identify key features or essential features of the claimed subject matter, nor is it intended to be used to limit the scope of the claimed subject matter.

### BRIEF DESCRIPTION OF THE DRAWINGS

Figs. 1A and 1B together show an exemplary user interface for calibrating a fraud detection system.
Fig. 2 is an exemplary functional block diagram of a system for detecting fraud.
Fig. 3 is a diagram of an exemplary computing environment in which the described methods and systems can be implemented.

### DETAILED DESCRIPTION

### Example 1 - Exemplary User Interface and Fraud Detection of Motor Vehicle Accidents

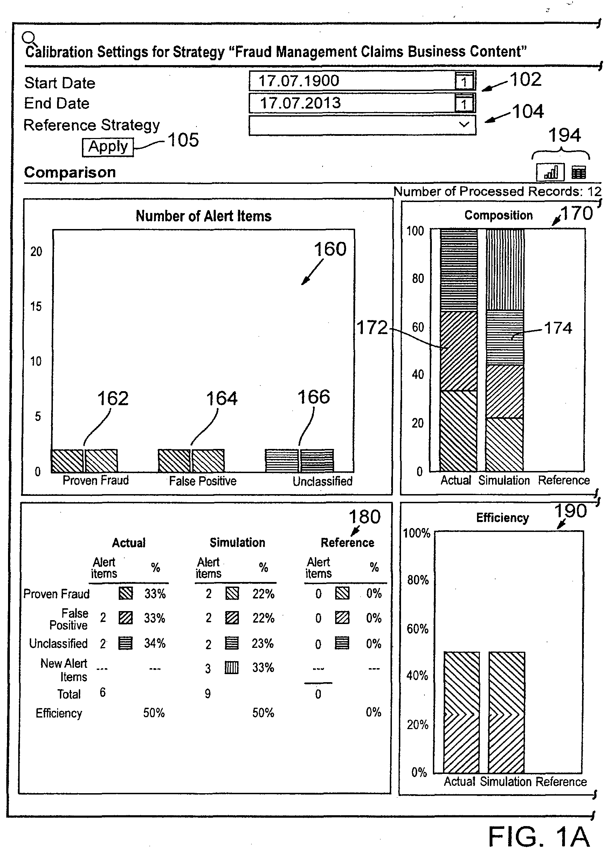

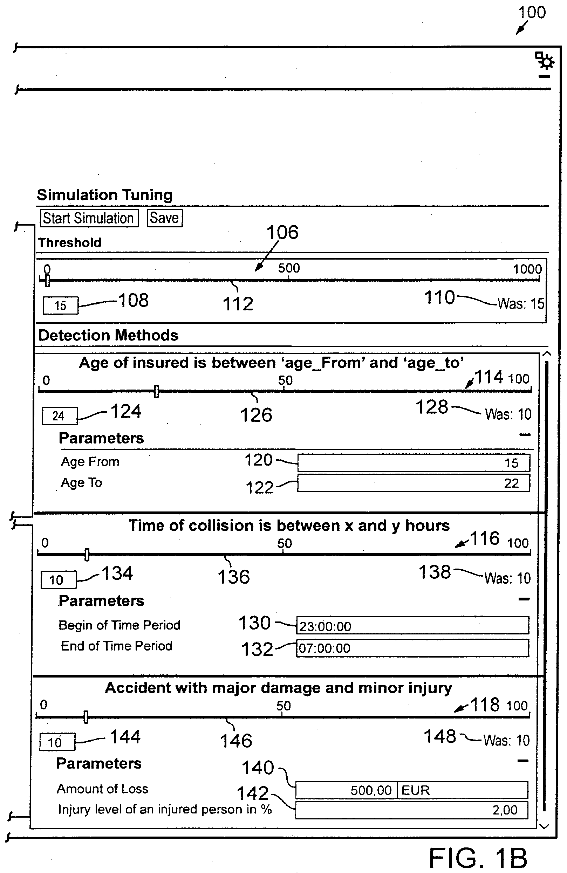

Figs. 1A and 1B together provide an illustration of an exemplary user interface 100 for calibrating a fraud detection system, such as to detect fraud through a review of electronic records. The user interface 100 is designed to permit a business user without technical database skills to define a search strategy, to conduct a simulated search (or simulation) using the search strategy on a set of known records, to display the results of the search to the user in a graphical format and, based on the results of the simulation, to calibrate (i.e., to revise as necessary or accept) the strategy to achieve a desired number of hits. In some implementations, the strategy is referred to as a "trial" strategy when run initially on known records and then becomes known as a "current" strategy once calibrated to achieve a desired number of results and configured to run on current records. A specific strategy can be identified with a unique identifier, sometimes referred to herein as a version.

A date field 102 allows the user to specify a "start date" and an "end date" for the search strategy to filter results according to a date associated with each record. In the illustrated implementation, the start date is July 17, 1900 and the end date is July 17, 2013. A field 104 allows the user to specify a reference strategy. A reference strategy is another search strategy, such as one that has already been completed based on separate inputs, and can be used for various purposes, such as to compare the performance of a current search strategy with a past search strategy. There is an Apply button 105 that functions to execute the currently specified search strategy on the indicated dates (and any optional reference strategy that is specified) as well as on the other specified inputs indicated. Examples of possible inputs are explained below in more detail.

At the right side of the user interface 100, there is a field 106 entitled "Threshold" for the user to specify a threshold. The user can set the threshold, e.g., to a manageable number of hits given the task at hand, available time and personnel to follow up on hits and/or other criteria. As indicated in a box 108, the current threshold is set at 15, and was previously also set at 15 as indicated at field 110. A slider 112 can also indicate the threshold and provide a visual cue to the user of the current threshold and the effects of modifying it. That is, the relative position of the slider 112 between the 0 and 1000 limits is approximately correlated with the numerical value ("15") shown in the "box" 108.

Below the threshold field 106, there can be one or more fields, such as the fields 114, 116 and 118 as shown, to allow the user to modify different inputs, e.g., criteria associated with the detection strategy. These inputs or criteria are also referred to as "detection methods."

The field 114 is an age of the insured criterion. In this example, the fraud detection system and methods concern fraud in insurance claims relating to motor vehicle accidents. The age of the insured criterion is currently set for age 15 to age 22 as indicated in the fields 120 and 122, respectively, for these parameters. As indicated at box 124 and on slider 126, the weighting factor for the age 15 to age 22 parameter has been set to 24. Previously, as indicated at 128, the weighting factor for this parameter was set to 10.

The field 116 is a time of collision input or criterion. In this example, the time of collision criterion has been set for 23:00 (11:00 pm) to 07:00 (7:00 am), e.g., to focus on records of accidents occurring during nighttime conditions, as indicated at fields 130 and 132, respectively. As indicated at box 134 and on slider 136, the weighting factor for records that meet the 23:00 to 07:00 time of collision parameters is currently set to 10. Previously, as indicated at 138, the weighting factor for this parameter was also set to 10.

The field 118 is an input or criterion for accidents involving major damage and minor injury. In this example, an amount of loss parameter has been set for 500.00 euros, and an injury level parameter has been set at 2%, as indicated at fields, 140, 142, respectively. As indicated at box 144 and on slider 146, the weighting factor for this parameter is currently set to 10. Previously, as indicated at 148, the weighting factor for this parameter was also set to 10.

In this example, there are three criteria (or rules), but of course it is possible to use greater or fewer criteria. An alert is triggered when weighting factor times the corresponding criteria or rule result, when summed for all criteria or rules, exceeds the threshold.

Above the threshold field 106, there are Simulation Tuning controls. A first control is a Start Simulation button 150 and a second control is a Save button 152. The Start Simulation button 150 is actuatable to execute the selected detection strategy as specified in the fields 102, 106, 114, 116 and 118 on historical and new records. The Save button 152 is actuatable to save the current results.

A graph 160 provides a visual indication of the number of hits, also referred to as alerts, resulting from execution of the selected detection strategy. Thus, the number of alerts is the number of records that meet all of the criteria and parameters. In the example of Figs. 1A and 1B, the search results are sorted into a Proven Fraud category 162, a False Positive category 164 and an Unclassified (or Undetermined) category 166. There are two records in the Proven Fraud category, which means that execution of the specified search strategy yielded alerts for two historical records in which fraud was proven or known to have occurred. There are two records in the False Positive category, which means that the search strategy yielded alerts for two historical records known not to be fraudulent. There are two records in the Unclassified category, which means that two of the alerts could not be classified as Proven Fraud or as False Positive, or that the risk value is too insignificant, or that there were insufficient resources (e.g., the investigator did not have sufficient time to investigate the claim). The left bar of each pair shows the number of historical hits or alerts and the right bar shows the number current hits or alerts using the current strategy.

To the right of the graph 160, a bar chart 170 can be provided. A first bar 172 shows the composition of the actual results, i.e., the respective proportions of the Proven Fraud, False Positive and Unclassified categories, respectively, which total 100% as indicated. A second bar 174 shows the composition of the simulated results. For the simulated results, there are Proven Fraud, False Positive and Unclassified categories, in addition to a category for New Alerts. When running a simulation, the strategy can produce new results that were not previously discovered, due to, e.g., changes in parameters, weighting factors and/or thresholds. Such "new" results are classified as New Alert items. The discovery of New Alert items may indicate that that the adjusted inputs are more efficient in finding results (e.g., suspicious cases) that had not previously been detected.

The categories in the bar chart 170 can be depicted similar to the graph 160 to allow the user to easily cross reference between the two graphics. For example, each category can be presented in the same color or shading style.

Below the graph 160, a chart 180 provides a numerical breakdown of the composition and an efficiency calculation. For the actual results, the efficiency is calculated to be 50%. Specifically, the efficiency is calculated as the number of Proven Fraud items divided by the total number of items, i.e., the sum of the Proven Fraud and False Positive items. For the simulation results, the efficiency is also calculated to be 50% based on the same calculation. A bar chart 190 provides a graphical representation of the efficiency calculations from the chart 180. If a reference strategy is used, its efficiency can be compared. The higher the efficiency, the greater the return on the spent investigation. So, investigators can perform trials of new strategies to see which are more efficient and therefore more productive.

A set of icons 194 indicates that the interface 100 is presently in a first mode in which graphs are displayed and can be toggled between this mode and a second mode in which data are shown in a list format.

### Example 2 - Functional Block Diagram

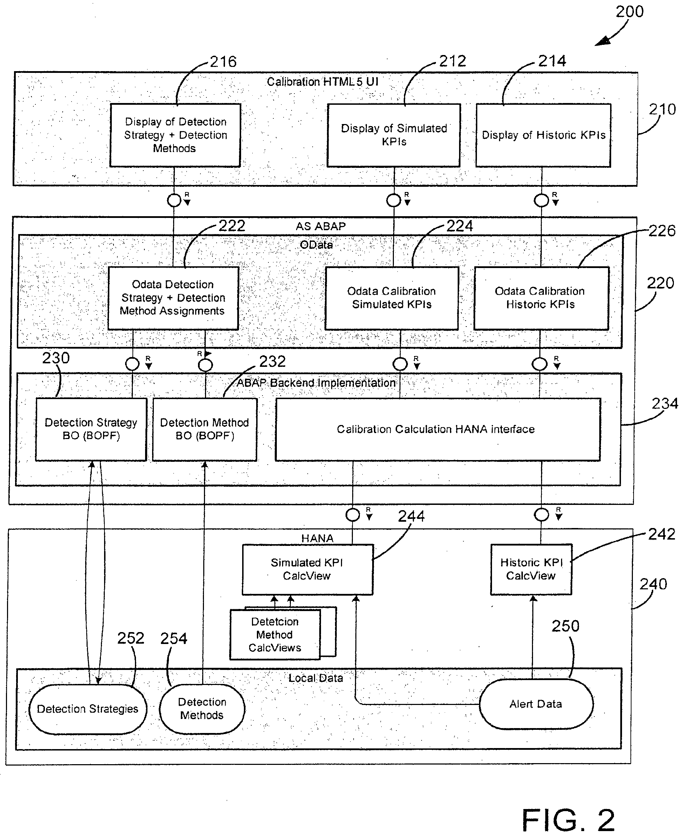

Fig. 2 is a functional block diagram of major components of a system 200 for calibrating a fraud detection routine according to one implementation. The first component 210 is a user interface, which may be a user interface for a desktop environment or for a mobile device environment. The user interface can be implemented in HTML 5 or in any other suitable computing language/platform. The first component 210 has functions 212, 214 for the display of simulated KPIs (Key Performance Indicators) and historic KPIs, respectively. As indicated, a function 216 reads detection strategies and detection method assignments from a component 220.

The component 220 as indicated is implemented on an AS ABAP, an application server for applications written in the Advanced Business Application Programming language. A module 222 is for detection of strategies and method assignments. Modules 224, 226 are for calibration of simulated KPIs and historic KPIs, respectively. The modules 222, 224 and 226 can be implemented in OData, an open data protocol for creating and consuming data APIs. These modules provide data from the backend for the user interface, e.g., via an OData interface (such as using REST technology).

Modules 230, 232 are a Detection Strategy BO (Business Object) and a Detection Method BO, respectively. These modules can be implemented in the Business Object Processing Framework. Local detection strategies data 252 and detection methods data 254 are linked to the modules 230, 232 respectively. A third module 234 for calibration calculation, which together with the modules 230,232 is also part of the ABAP backend implementation, is linked via a HANA interface to a HANA in-memory database component 240.

At 242, a fixed calculation view is used to determine the historic KPIs requested by the third module 234. Local alert data 250 from a real detection mass run are included in this calculation.

At 244, a simulated calculation view is generated using the detection strategy. The simulated calculation view calls the detection methods of the strategy and uses the given inputs, such as the selection period, the threshold, the weighting factor(s) and the parameter values as entered via the user interface.

### Example 3 - Investigation of Tax Fraud

In the public sector, another implementation of the described approach to calibrating fraud detection concerns tax collection. In this example, an investigator or other user of the system queries a database of historic tax collection records containing at least some records of known fraudulent activity associated with specific taxpayers.

As the user reviews the historic data, the user can devise a detection strategy based on the historic records that yields an appropriate number of fraudulent records, e.g., a quantity of fraudulent records that the investigator can complete a review of within an allotted time, e.g., over the investigator's next production period. Alternatively, or in addition, the investigator could seek to determine fraudulent records having specific attributes, such as a class of suspicious deduction or a claim to an exemption that rarely applies. The investigator runs the trial detection strategy on the historic records. If far too many hits are produced, then the investigator can refine the strategy, e.g., by using more specific criteria. On the other hand, if the trial detection strategy produces too few results, then the investigator can refine the strategy, e.g., by using less specific criteria. For example, a narrow range for a particular parameter can be specified more broadly.

Once a desired number of results is produced, the strategy can be said to be calibrated, and this calibrated strategy can be saved. The calibrated strategy can then be used on current records. As appropriate, in addition to investigation of historic records, the calibrated strategy can be used for the synchronous investigation of current records.

### Example 4 - Internal Audit of Corporation

According to another implementation, the system and methods described herein are used by a corporation or other business entity to conduct an internal audit or otherwise detect fraud. An employee or outside investigator could use the described approaches to identify potentially fraudulent practices. As just some examples, these may include investigating whether an alleged vendor is fictitious, whether the same employee approves most of the invoices from a specific vendor, whether an alleged employee has ever logged in to any of the corporation's systems, whether invoices are paid without corresponding purchase orders, etc.

### Example 5 - Exemplary In-Memory Database

In any of the examples herein, the technologies can be implemented in an in-memory, columnar database (e.g., based on SAP HANA database technology or the like). The in-memory database can serve as the primary persistence for the data. In a cloud-based solution, memory storing the database can be maintained at (e.g., hosted by) the service provider for access by the customer. From a customer perspective, the in-memory aspect of the database can be technically transparent. So, a customer can specify an in-memory database as a data source like any other data source.

To access such a database, a view of the database can be provided. So, when an multidimensional analytical view (MDAV) is based on such a database it is typically based on a view of the database. Such a view can have associated metadata in a modeling scenario that forms a data model for the view. As described herein, the metadata in the data model for the database view can be leveraged for MDAVs based on the database.

Such a database can be optimized for operations performed directly on the database in memory. For example, joins and unions need not be generated by retrieving database contents and then calculating a join or union.

Due to the columnar and in-memory aspects of the database, searches and other operations can be performed on columns (e.g., in the database or views of the database) as if the columns were indexed or if it were the primary key of the table, even though a separate traditional index need not be implemented.

Such an arrangement can allow tenants to work with business data at a speed that is unprecedented. Both transactional and analytical processing can be performed using the in-memory, columnar database.

### Example 6 - Exemplary Computing Systems

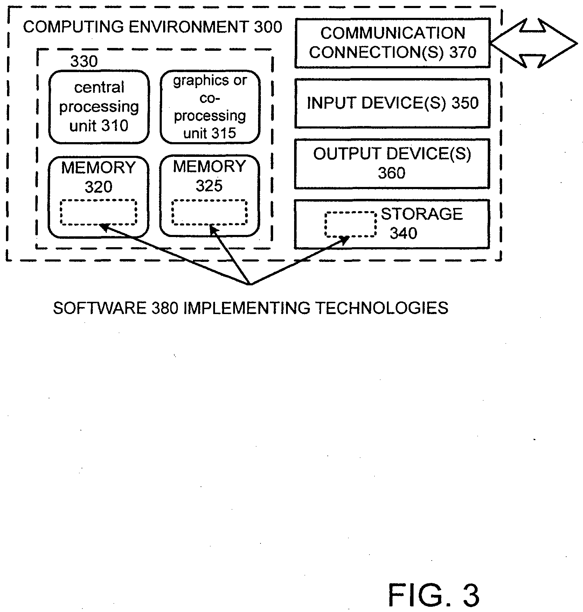

As described, the system and methods allow the investigator to use the historic data to calibrate a strategy that yields appropriate results for use on current data. In certain circumstances, the calibrated strategy can then be used synchronously as an aid to detecting fraud and halting an associated business process, e.g., issuance of a check, before the fraud occurs. FIG. 3 illustrates a generalized example of a suitable computing system 300 in which several of the described innovations may be implemented. The computing system 300 is not intended to suggest any limitation as to scope of use or functionality, as the innovations may be implemented in diverse general-purpose or special-purpose computing systems.

With reference to FIG. 3, the computing system 300 includes one or more processing units 310, 315 and memory 320, 325. In FIG. 3, this basic configuration 330 is included within a dashed line. The processing units 310, 315 execute computer-executable instructions. A processing unit can be a general-purpose central processing unit (CPU), processor in an application-specific integrated circuit (ASIC) or any other type of processor. In a multi-processing system, multiple processing units execute computer-executable instructions to increase processing power. For example, FIG. 3 shows a central processing unit 310 as well as a graphics processing unit or co-processing unit 315. The tangible memory 320, 325 may be volatile memory (e.g., registers, cache, RAM), non-volatile memory (e.g., ROM, EEPROM, flash memory, etc.), or some combination of the two, accessible by the processing unit(s). The memory 320, 325 stores software 380 implementing one or more innovations described herein, in the form of computer-executable instructions suitable for execution by the processing unit(s).

A computing system may have additional features. For example, the computing system 300 includes storage 340, one or more input devices 350, one or more output devices 360, and one or more communication connections 370. An interconnection mechanism (not shown) such as a bus, controller, or network interconnects the components of the computing system 300. Typically, operating system software (not shown) provides an operating environment for other software executing in the computing system 300, and coordinates activities of the components of the computing system 300.

The tangible storage 340 may be removable or non-removable, and includes magnetic disks, magnetic tapes or cassettes, CD-ROMs, DVDs, or any other medium which can be used to store information in a non-transitory way and which can be accessed within the computing system 300. The storage 340 stores instructions for the software 380 implementing one or more innovations described herein.

The input device(s) 350 may be a touch input device such as a keyboard, mouse, pen, or trackball, a voice input device, a scanning device, or another device that provides input to the computing system 300. For video encoding, the input device(s) 350 may be a camera, video card, TV tuner card, or similar device that accepts video input in analog or digital form, or a CD-ROM or CD-RW that reads video samples into the computing system 300. The output device(s) 360 may be a display, printer, speaker, CD-writer, or another device that provides output from the computing system 300.

The communication connection(s) 370 enable communication over a communication medium to another computing entity. The communication medium conveys information such as computer-executable instructions, audio or video input or output, or other data in a modulated data signal. A modulated data signal is a signal that has one or more of its characteristics set or changed in such a manner as to encode information in the signal. By way of example, and not limitation, communication media can use an electrical, optical, RF, or other carrier.

The innovations can be described in the general context of computer-executable instructions, such as those included in program modules, being executed in a computing system on a target real or virtual processor. Generally, program modules include routines, programs, libraries, objects, classes, components, data structures, etc. that perform particular tasks or implement particular abstract data types. The functionality of the program modules may be combined or split between program modules as desired in various embodiments. Computer-executable instructions for program modules may be executed within a local or distributed computing system.

For the sake of presentation, the detailed description uses terms like "determine" and "use" to describe computer operations in a computing system. These terms are high-level abstractions for operations performed by a computer, and should not be confused with acts performed by a human being. The actual computer operations corresponding to these terms vary depending on implementation.

### Example 7 - Computer-Readable Media

Any of the computer-readable media herein can be non-transitory (e.g., volatile memory such as DRAM or SRAM, nonvolatile memory such as magnetic storage, optical storage, or the like) and/or tangible. Any of the storing actions described herein can be implemented by storing in one or more computer-readable media (e.g., computer-readable storage media or other tangible media). Any of the things (e.g., data created and used during implementation) described as stored can be stored in one or more computer-readable media (e.g., computer-readable storage media or other tangible media). Computer-readable media can be limited to implementations not consisting of a signal.

Any of the methods described herein can be implemented by computer-executable instructions in a computer program product. In a specific configuration the computer program product may be tangibly embodied as one or more computer readable media and/or embodied as a signal or data stream. Any of the methods described herein can be implemented by computer-executable instructions in (e.g., stored on, encoded on, or the like) one or more computer-readable media (e.g., computer-readable storage media or other tangible media) or one or more computer-readable storage devices (e.g., memory, magnetic storage, optical storage, or the like). Such instructions can cause a computing device to perform the method. The technologies described herein can be implemented in a variety of programming languages.

### ALTERNATIVES

The technologies from any example can be combined with the technologies described in any one or more of the other examples. In view of the many possible embodiments to which the principles of the disclosed technology may be applied, it should be recognized that the illustrated embodiments are examples of the disclosed technology and should not be taken as a limitation on the scope of the disclosed technology. Rather, the scope of the disclosed technology includes what is covered by the following claims.

## Claims

1. A method of determining potentially fraudulent records in a database (240) comprising:
providing a graphical user interface (100; 210) to a user to display multiple inputs, to receive inputs from the user and to display results,
defining a detection strategy (216) targeted to detect existing records (252) from the database (240), the detection strategy comprising multiple inputs, wherein the multiple inputs comprise at least one threshold, at least one detection method, at least one weighting factor (124; 134; 144), and at least one parameter (120-140; 122-142); wherein the multiple inputs can be individually set for each of the at least one detection method;
executing the detection strategy (216) on existing records (252) and displaying results for review by a user;
dynamically calibrating the detection strategy (216) as desired based on the inputs received from the user and displaying any modified results, wherein the calibrated detection strategy produces results that were not previously known, due to changes in the at least one parameter (120-140; 122-142), the at least one weighting factor (124; 134; 144) and/or the at least one threshold;
setting the calibrated detection strategy; and
executing the calibrated detection strategy on new records to detect potentially fraudulent records warranting investigation.

2. The method of claim 1, wherein at least one of defining a detection strategy and dynamically calibrating the detection strategy comprises setting at least one of a threshold (106), at least one weighting factor (124; 134; 144) and a parameter (120-140; 122-142).

3. The method of any one of the preceding claims, further comprising calculating and preferably displaying metrics for proven records (162) and false positive records (164), wherein the false positive records (164) are a subset of the existing records suspected of being fraudulent based on the results of the detection strategy but determined in fact to be non-fraudulent.

4. The method of any one of the preceding claims, wherein dynamically calibrating the detection strategy as desired comprises modifying inputs until a desired number of false positive results is determined.

5. The method of any one of the preceding claims, wherein executing the calibrated detection strategy on new records comprises synchronously executing the calibrated detection strategy and halting an associated business process if fraudulent activity is determined.

6. The method of any one of the preceding claims, further comprising creating an alert item for each of the new records detected by the calibrated detection strategy, and
preferably communicating each alert item to a case management system.

7. The method of any one of the preceding claims, further comprising calculating an efficiency (190) based on the results and displaying the efficiency (190).

8. The method of any one of the preceding claims, wherein dynamically calibrating the detection strategy comprises displaying and receiving input from influence controls that graphically depict how changes to inputs modify results.

9. The method of any one of the preceding claims, further comprising, before calibrating, duplicating existing records from an enterprise resource planning system to a fraud management system (200) having in-memory processing capability.

10. A computer system (200; 300), comprising:
a processor (310, 315); and
memory (320, 325) storing computer-executable instructions for causing the computer system (200; 300) to perform a method of any one of claims 1 to 9.

11. The computer system (200; 300) of claim 10, wherein the method further comprises receiving input from the user to set at least one of a threshold (106) and weighting factor (124; 134; 144), and
preferably creating an alert item for each new record detected to as potentially fraudulent.

12. The computer system (200; 300) of claim 10 or 11, further comprising influence controls actuatable by a user to change at least one of the multiple inputs and to dynamically and graphically display any modified results that are produced.

13. A computer program product comprising computer-executable instructions for performing a method of any one of claims 1 to 9.

## Patentansprüche

1. Ein Verfahren zur Bestimmung von möglicherweise betrügerischen Datensätzen in einer Datenbank (240), das Folgendes umfasst:
bereitstellen einer grafischen Benutzerschnittstelle (100; 210) für einen Benutzer, um mehrere Eingaben anzuzeigen, um Eingaben vonseiten des Benutzers zu empfangen und um Ergebnisse anzuzeigen,
definieren einer Erfassungsstrategie (216), die angestrebt wird, um existierende Datensätze (252) aus der Datenbank (240) zu erfassen, wobei die Erfassungsstrategie mehrere Eingaben umfasst, wobei die mehreren Eingaben mindestens einen Schwellenwert, mindestens eine Erfassungsmethode, mindestens einen Gewichtungsfaktor (124; 134; 144) und mindestens einen Parameter (120 - 140; 122 - 142) umfassen; wobei die mehreren Eingaben für jede der mindestens einen Erfassungsstrategie individuell gesetzt werden können;
ausführen der Erfassungsstrategie (216) an existierenden Datensätzen (252) und anzeigen von Ergebnissen zur Überprüfung durch den Benutzer;
dynamisch kalibrieren der Erfassungsstrategie (216) wie erwünscht basierend auf den vom Benutzer erhaltenen Eingaben und anzeigen von jeglichen geänderten Ergebnissen, wobei die kalibrierte Erfassungsstrategie Ergebnisse liefert, die zuvor nicht bekannt waren, bedingt durch die Veränderungen bei dem mindestens einen Parameter (120 - 140; 122 - 142), dem mindestens einen Gewichtungsfaktor (124; 134; 144) und/oder dem mindestens einen Schwellenwert;
setzen der kalibrierten Erfassungsstrategie; und
ausführen der kalibrierten Erfassungsstrategie an neuen Datensätzen, um möglicherweise betrügerische Datensätze zu erfassen, die eine Untersuchung rechtfertigen.

2. Das Verfahren nach Anspruch 1, wobei mindestens einer der Folgenden: definieren einer Erfassungsstrategie und dynamisch kalibrieren der Erfassungsstrategie das Setzten von mindestens einen unter den Folgenden umfasst: einen Schwellenwert (106), mindestens einen Gewichtungsfaktor (124; 134; 144) und einen Parameter (120 - 140; 122 - 142).

3. Das Verfahren nach irgendeinem der vorhergehenden Ansprüche, das des Weiteren das Berechnen und vorzugsweise das Anzeigen von Metren bewährter Datensätze (162) und falsch-positiven Datensätzen (164) umfasst, wobei die falsch-positiven Datensätze (164) eine Teilmenge der existierenden Datensätze sind, die verdächtigt werden, betrügerisch zu sein, basierend auf den Ergebnissen der Erfassungsstrategie, bei denen aber festgestellt worden ist, dass sie de-facto nicht betrügerisch sind.

4. Das Verfahren nach irgendeinem der vorhergehenden Ansprüche, wobei das dynamische Kalibrieren der Erfassungsstrategie umfasst, Eingaben zu verändern, bis eine gewünschte Anzahl von falsch-positiven Ergebnissen bestimmt worden ist.

5. Das Verfahren nach irgendeinem der vorhergehenden Ansprüche, wobei das Ausführen der kalibrierten Erfassungsstrategie an neuen Datensätzen das synchrone Ausführen der kalibrierten Erfassungsstrategie und das Anhalten eines verknüpften Geschäftsprozesses umfasst, falls eine betrügerische Aktivität festgestellt wird.

6. Das Verfahren nach irgendeinem der vorhergehenden Ansprüche, das des Weiteren das Erzeugen eines Warneintrags (*alert item*) für jeden der neuen Datensätze umfasst, die von der kalibrierten Erfassungsstrategie erfasst worden sind, und
vorzugsweise kommunizieren eines jeden Warneintrags an ein Fallverwaltungssystem.

7. Das Verfahren nach irgendeinem der vorhergehenden Ansprüche, das des Weiteren das Berechnen einer Effizienz (190) basierend auf den Ergebnissen und das Anzeigen der Effizienz (190) umfasst.

8. Das Verfahren nach irgendeinem der vorhergehenden Ansprüche, wobei das dynamische Kalibrieren der Erfassungsstrategie das Anzeigen und Eingaben Empfangen von Beeinflussungs-Steuerungen (*influence controls*) umfasst, die grafisch veranschaulichen, wie Eingabeänderungen Ergebnisse verändern.

9. Das Verfahren nach irgendeinem der vorhergehenden Ansprüche, das des Weiteren, vor dem Kalibrieren, das Duplizieren von existierenden Datensätzen aus einem Ressourcenplanungssystem zu einem Betrugsverwaltungssystem (200) mit speicherinterner Verarbeitungsfähigkeit umfasst.

10. Ein Computersystem (200; 300), dass Folgendes umfasst:
einen Prozessor (310, 315); und
Speicher (320, 325), der computerlesbare Anweisungen speichert, um das Computersystem (200; 300) dazu zu bringen, ein Verfahren nach irgendeinem der Ansprüche 1 bis 9 durchzuführen.

11. Ein Computersystem (200; 300) nach Anspruch 10, wobei das Verfahren des Weiteren umfasst, Eingaben vom Benutzer zu empfangen, um mindestens einen der Folgenden zu setzen: einen Schwellenwert (106) und einen Gewichtungsfaktor (124; 134; 144), und
vorzugsweise erzeugen eines Warneintrags (*alert item*) für jeden neuen Datensatz, der als möglicherweise betrügerisch erfasst worden ist.

12. Ein Computersystem (200; 300) nach Anspruch 10 oder 11, das des Weiteren Beeinflussungs-Steuerungen (*influence controls*) umfasst, die vom Benutzer betätigbar sind, um mindestens eine der mehreren Eigaben zu verändern und um jegliche dadurch erzeugte modifizierte Ergebnisse dynamisch und grafisch anzuzeigen.

13. Ein Computerprogrammprodukt, das von einem Computer ausführbare Anweisungen zur Durchführung eines Verfahrens nach irgendeinem der Ansprüche 1 bis 9 umfasst.

## Revendications

1. Un procédé de détermination de fichiers éventuellement frauduleux dans une base de données (240), comprenant le fait de :
fournir une interface utilisateur graphique (100 ; 210) pour un utilisateur afin d'afficher plusieurs entrées, de recevoir des entrées de la part d'un utilisateur et d'afficher des résultats,
définir une stratégie de détection (216) visant à détecter des fichiers existants (252) à partir d'une base de données (240), la stratégie de détection comprenant plusieurs entrées, sachant que les plusieurs entrées comprennent au moins un seuil, au moins une méthode de détection, au moins un facteur de pondération (124 ; 134 ; 144), et au moins un paramètre (120 - 140 ; 122 - 142) ; sachant que les plusieurs entrées peuvent être individuellement réglées pour chacune parmi la ou les méthodes de détection ;
exécuter la stratégie de détection (216) sur des fichiers existants (252) et afficher des résultats aux fins d'examen par un utilisateur ;
calibrer dynamiquement la stratégie de détection (216) selon les besoins en se basant sur les entrées reçues de la part de l'utilisateur et afficher tout résultat modifié, sachant que la stratégie de détection calibrée produit des résultats inconnus antérieurement, en raison de changements parmi le ou les paramètres (120 - 140 ; 122 - 142), le ou les facteurs de pondération (124 ; 134 ; 144) et/ou le ou les seuils ;
établir (*setting*) la stratégie de détection calibrée ; et
exécuter la stratégie de détection calibrée sur des fichiers nouveaux pour détecter des fichiers éventuellement frauduleux qui demandent enquête.

2. Le procédé d'après la revendication 1, sachant qu'au moins un parmi les suivants : définir une stratégie de détection et calibrer dynamiquement la stratégie de détection comprend le fait d'établir au moins un des suivants : un seuil (106), au moins un facteur de pondération (124 ; 134 ; 144) et un paramètre (120 - 140 ; 122 - 142).

3. Le procédé d'après une quelconque des revendications précédentes, comprenant en outre le fait de calculer et préférablement afficher des métriques pour des fichiers éprouvés (162) et des fichiers faussement positifs (164), sachant que les fichiers faussement positifs (164) sont un sous-ensemble des fichiers existants soupçonnés d'être frauduleux sur la base des résultats de la stratégie de détection mais déterminés comme étant effectivement non frauduleux.

4. Le procédé d'après une quelconque des revendications précédentes, sachant que le fait de calibrer dynamiquement la stratégie de détection en fonctions des besoins comprend le fait de modifier les entrées jusqu'à ce qu'un nombre souhaité de résultats faussement positifs soit déterminé.

5. Le procédé d'après une quelconque des revendications précédentes, sachant que le fait d'exécuter la stratégie de détection calibrée sur des nouveaux fichiers comprend le fait d'exécuter de manière synchrone la stratégie de détection calibrée et d'arrêter un processus d'entreprise associé si une activité frauduleuse a été déterminé.

6. Le procédé d'après une quelconque des revendications précédentes, comprenant en outre le fait de créer un objet d'alerte pour chacun parmi les nouveaux fichiers détectés par la stratégie de détection calibrée, et
préférablement communiquer chaque objet d'alerte à un système de gestion de cas.

7. Le procédé d'après une quelconque des revendications précédentes, comprenant en outre le fait de calculer un rendement (190) basé sur les résultats et le fait d'afficher le rendement (190).

8. Le procédé d'après une quelconque des revendications précédentes, sachant que le fait de calibrer dynamiquement la stratégie de détection comprend le fait d'afficher et recevoir une entrée de la part de commandes d'influence qui représentent graphiquement comment des modifications apportées aux entrées modifient les résultats.

9. Le procédé d'après une quelconque des revendications précédentes, comprenant en outre le fait de dupliquer, avant le calibrage, des fichiers existants à partir d'un système de planification des ressources d'entreprise vers un système de gestion des fraudes (200) présentant une aptitude au traitement en mémoire.

10. Un système informatique (200 ; 300), comprenant :
un processeur (310, 315) ; et
de la mémoire (320, 325) stockant des instructions lisibles par ordinateur pour amener le système informatique (200 ; 300) à effectuer un procédé d'après une quelconque des revendications de 1 à 9.

11. Le système informatique (200 ; 300) d'après la revendication 10, sachant que le procédé comprend en outre le fait de recevoir une entrée de la part de l'utilisateur pour établir au moins un parmi les suivants : un seuil (106) et un facteur de pondération (124 ; 134 ; 144), et de
préférablement créer un objet d'alerte pour chaque nouveau fichier détecté comme étant éventuellement frauduleux.

12. Le système informatique (200 ; 300) d'après la revendication 10 ou 11, comprenant en outre des commandes d'influence pouvant être actionnées par un utilisateur pour modifier au moins un des multiples entrées et pour afficher dynamiquement et graphiquement tout résultat modifié, qui a été crée.

13. Un produit programme informatique comprenant des instructions pouvant être exécutées par ordinateur pour effectuer un procédé d'après une quelconque des revendications de 1 à 9.
